# EUROPEAN PATENT SPECIFICATION

(11) **EP 1 709 777 B1**
(45) Date of publication and mention of the grant of the patent: **25.04.2007**
(21) Application number: 04701012.9
(22) Date of filing: 09.01.2004
(51) Int. Cl.: H04L 29/06

(54) **SESSION INITIATION PROTOCOL SIGNALLING**
SITZUNGSEINLEITUNGSPROTOKOLLSIGNALISIERUNG (SIP)
SIGNALISATION DE PROTOCOLE D'OUVERTURE DE SESSION

(43) Date of publication of application: 11.10.2006
(73) Proprietor: TELEFONAKTIEBOLAGET LM ERICSSON (publ), 126 25 Stockholm (SE)
(72) Inventor: SUOTULA, Janne, Kristian, FIN-02120 Espoo (FI); GARCIA-MARTIN, Miguel-Angel, FIN-02770 Espoo (FI)
(74) Representative: Lind, Robert
(86) International application number: PCT/EP2004/050011
(87) International publication number: WO 2005/069575

(56) References cited:
- G. CAMARILLO: "Requirements for Session Initiation Protocol (SIP) Exploder Invocation" DRAFT-CAMARILLO-SIPPING-EXPLODERS-01.TXT, [Online] 23 November 2003 (2003-11-23), pages 1-7, XP002292767 Retrieved from the Internet: URL:http://www.ietf.org/internet-drafts/dr aft-camarillo-sipping-exploders-01.txt> cited in the application
- G. CAMARILLO, A. NIEMI, H. KHARTABIL, M. ISOMAKI: "Session Initiation Protocol (SIP) Exploder Invocation" DRAFT-CAMARILLO-SIPPING-EXPLODERS-SOLUTION -00.TXT, [Online] 22 November 2003 (2003-11-22), pages 1-9, XP002292768 Retrieved from the Internet: URL:http://www.ietf.org/internet-drafts/dr aft-camarillo-sipping-exploders-solution-0 0.txt> cited in the application
- G. CAMARILLO, A. ROACH: "Providing a Session Initiation Protocol (SIP) Application Server with a List of URIs" DRAFT-CAMARILLO-URI-LIST-00.TXT, [Online] 22 November 2003 (2003-11-22), pages 1-10, XP002292769 Retrieved from the Internet: URL:http://www.ietf.org/internet-drafts/dr aft-camarillo-sipping-uri-list-02.txt> cited in the application

## Description

### Field of the Invention

The present invention relates to Session Initiation Protocol (SIP) signalling and more particularly to signalling handled and generated by so-called SIP exploders.

### Background to the Invention

To facilitate the provision of multimedia services via the packet switched "domain", the 3^{rd} Generation Partnership project (3GPP) responsible for the 3G standards has been developing a so-called IP Multimedia Core Network Subsystem (IMS). IMS communicates with the packet switched access network (e.g. GPRS) and contains all elements that are used to provide IP based multimedia services. For a mobile to mobile call, and assuming the mobiles belong to different networks, an IMS will be provided in each mobile's home network. Each IMS is connected to the GPRS network of its home network. The base protocol for multimedia services is the IETF Session Initiation Protocol (SIP) - RFC3261. SIP makes it possible for a calling party to establish a packet switched session to a called party (using so-called SIP User Agents, UAs, installed in the user terminals) even though the calling party does not know the current IP address of the called party prior to initiating the call. SIP provides other functionality including the negotiation of session parameters (e.g. Quality of Service and codecs, with the help of the Session Description Protocol), the control of ongoing sessions, and the tearing down of sessions.

SIP is of course designed for use with any IP based network architecture and is not limited to 3G networks. In particular, SIP may be used to establish and control sessions over the Internet or IP LANs/WANs.

The concept of the SIP "exploder" has been recently introduced in order to support various functionalities and services including presence services, Push to Talk over Cellular (PoC), Push to Show, etc. These functionalities/services have in common the need to distribute messages to members of pre-defined groups of receivers or to an adhoc group of receivers. The SIP exploder is a concept borrowed from email services where a similar need arises, i.e. the same email messages must be distributed to members of pre-defined mailing lists, or to a number of destinations addresses included in the message itself. The SIP exploder is considered in: (1) IETF: Requirements for Session Initiation Protocol (SIP) Exploder Invocation, draft-camarillo-sipping-exploders-01.txt; (2) IETF: Session Initiation Protocol (SIP) Exploder Invocation, draft-camarillo-sipping-exploders-01.txt; and (3) IETF: Session Initiation Protocol (SIP) Exploder Invocation, draft-camarillo-sipping-exploders-solution-00.txt. The SIP exploder recognises list identifiers contained within SIP Universal Resource Identifiers (URIs) and acts accordingly. For example, the URI sip:list33@somedomain.com (the portion "somedomain.com" identifying the home network within which the exploder is located) is recognised as referring to the list number 33. The SIP exploder then duplicates the associated message for each of the members of that list, and passes the messages to the Serving Call/Session Control Function (S-CSCF) for transmission to their destinations.

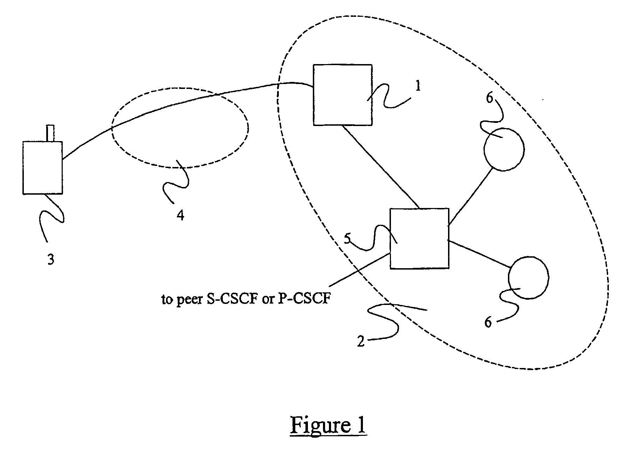

Figure 1 illustrates a typical IMS architecture in which a Proxy CSCF (P-CSCF) 1 of the IMS 2 communicates with a user terminal 3 via the packet switched access network 4. The P-CSCF 1 routes SIP signalling messages to a S-CSCF 5 which is responsible *inter alia* for maintaining data on the current location of the user terminal 3. By way of example, the P-CSCF may be located in a visited or home network, whilst the S-CSCF is located in the home network of the mobile terminal. Signalling is forwarded by the S-CSCF towards its destination which might include another S-CSCF in the destination home network and another P-CSCF in the destination visited or home network.

A number of application servers (ASs) 6 are attached to the S-CSCF 5. These ASs provide various intelligent services to the IMS. The SIP exploder introduced above is implemented in such an AS.

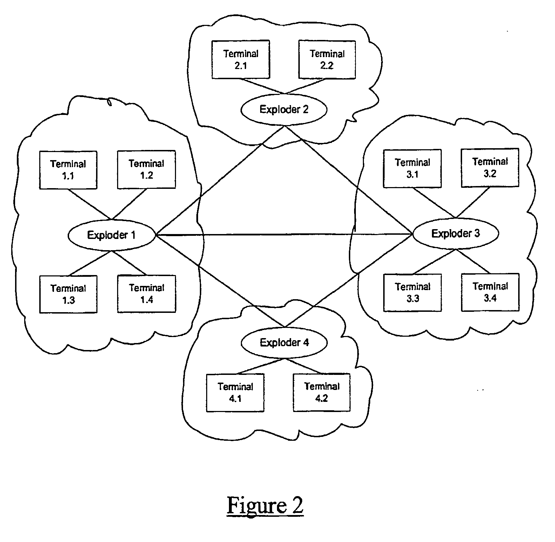

It might be the case that a list held by a SIP exploder contains URIs belonging to other networks. Some of these URIs may themselves correspond to lists, the members of which are known only to the exploders of those other networks. Figure 2 illustrates a scenario in which a number of IP based networks (I to 4) exchange user and signalling data, with each network comprising a SIP exploder. For simplicity, the SIP servers (P-CSCF and S-CSCF), access networks and other intermediate nodes have been omitted.

For each network, a number of user terminals are shown, each of which communicates with the associated SIP exploder via the packet switched access network and the IMS: Exploder 1 serves a number of terminals identified as Terminals 1.1, 1.2, 1.3 and 1.4, Exploder 2 serves two terminals identified as Terminal 2.1 and Terminal 2.2, and so on. If Terminal 1.1 wants to send a message to a list hosted by Exploder 1, Exploder 1 provides the exploder service to that terminal, i.e., sending a copy of the SIP message to each of the entries in the list.

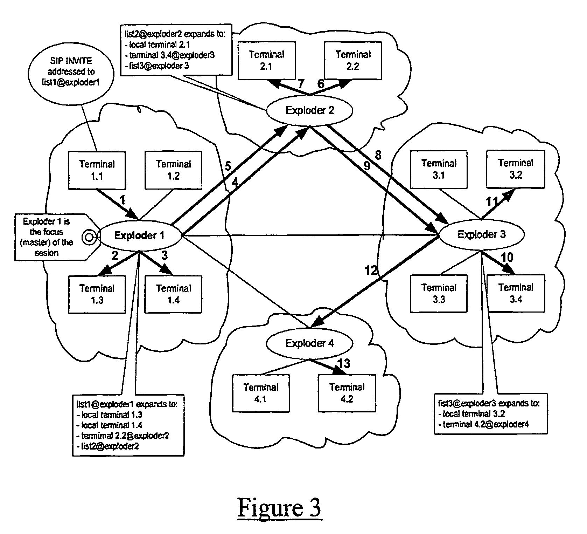

Figure 3 illustrates an example operation of the Exploders in which a potentially significant problem arises. In this example, it is assumed that Terminal 1.1 sends a SIP INVITE request addressed to sip:list1@exploder1. The INVITE request is denoted as step 1 in Figure 3. Exploder 1 receives the INVITE request (forwarded by the S-CSCF according to the application of some pre-defined rule set, e.g. forward to Exploder 1 messages addressed to a list set) addressed to list1. As this is the first exploder in the path, Exploder 1 acts as the master (sometimes called "focus") of the session: this role is relevant in the case that a mechanism to manage "floor control" is applied (floor control can be used for example to allow only one terminal to "talk" within a session, at any given time). Exploder 1 sends an INVITE request to each of the entries in list1. In this example, list1 contains four entries: the local Terminals 1.3 and 1.4, the Terminal 2.2 located in the domain of Exploder 2, and a list2 belonging to the Exploder 2. Whilst the example of the SIP INVITE message is used here, this discussion applies equally to other SIP procedure such as SUBSCRIBE, MESSAGE, etc.

A first problem with this procedure is that Exploder 1 must send two different INVITE requests to receivers within the same network. The INVITE requests addressed to Terminal 2.2 and list2@exploder2 follow the same path to the same network. This does not represent an optimal use of resources. Whilst the sending of only two different INVITEs may not represent a great problem, if the number of receivers in the destination network is high (e.g. several hundred), the required bandwidth and processing power may not be available.

Considering further the procedure illustrated in Figure 3, the Exploder 2 receives the INVITE requests (messages 4 and 5). One request is addressed to Terminal 2.2 and is delivered to that Terminal as message 6. The other request is addressed to list2 in that local Exploder 2. List2 contains three entries: the local Terminal 2.1, the remote Terminal 3.4 in the domain of Exploder 3, and a list3 belonging to Exploder 3. Therefore, the Exploder 2 generates messages 7, 8 and 9. The same lack of efficient resource usage is again present: messages 8 and 9 are duplicated, even though they have to traverse the same set of nodes. Similarly, Exploder 3 receives the INVITE requests (messages 8 and 9). One request is addressed to Terminal 3.4, and delivered as message 10. The other request is addressed to list3 at the local Exploder 3. List3 contains two entries: the local terminal 3.2 and the Terminal 4.2 at exploder 4. These result in messages 11 and 12.

A second problem which arises as a result of the conventional procedure is the long path of SIP signalling that may be created between edge endpoints. For example, when Terminal 4.2 has to send any SIP message relating to the established session, the SIP message must traverse Exploder 4, Exploder 3, Exploder 2, Exploder 1 until it is finally distributed to Terminal 1.1. This is necessary given that each exploder is, from the SIP perspective, a UA client or server associated with a particular "leg" of the session.

This creates a problem for real-time applications including (but not limited to) SIP. If a floor control mechanism is in place, and the floor control signalling follows the initial signalling path, Exploder 1 will be acting as the floor control manager. Terminals located "far away" in the signalling path will need to request the floor from the master exploder of the session (Exploder 1), and that request will take time to traverse the chain of exploders. As a consequence, users may not get a true real-time experience.

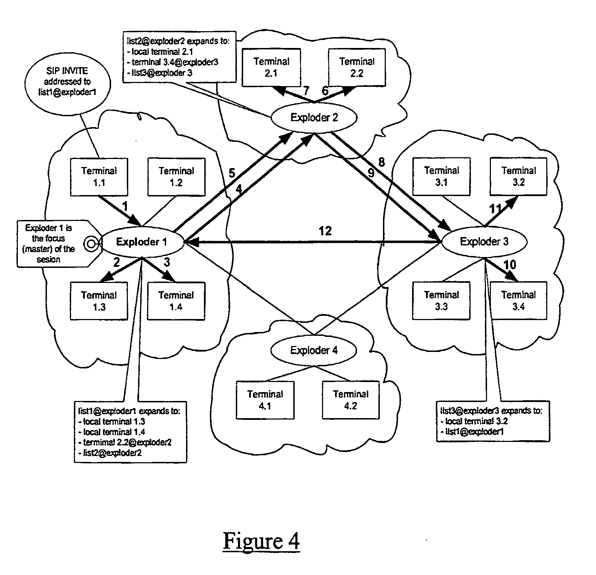

A third problem with the conventional procedure is now identified with reference to Figure 4, which follows on from the procedure of Figure 3. It is assumed that list3 in Exploder 3 contains two entries: one pointing to the local Terminal 3.2 and the other pointing to a list1 at Exploder 1. Exploder 3 sends the INVITE request to listl@exploderl (message 12 in Figure 4). When Exploder 1 receives the INVITE request, it is unable to determine that the INVITE has been already "exploded" and executed by the same list (message 1), so Exploder 1 starts the process again and sends a copy of the INVITE request to the four entries of list1. The signalling procedure has entered a loop.

It is noted that a single SIP message sent from an initiating terminal may contain multiple destination addresses, none of which are list addresses. Nevertheless, problems similar to those identified above might arise in this scenario, e.g. multiple messages being sent to the same destination network.

It will also be appreciated that the initiating message may be a SIP EXPLODE type message that carries another complete SIP message or a fragment of another SIP message (e.g., INVITE) together with a collection of destination addresses. The receiving exploder sends the encapsulated INVITE message to the various destination addresses to that user. Again, the problems identified above are likely to arise when using SIP EXPLODE messages in this way.

### Summary of the Invention

It is an object of the present invention to enable interdomain traffic to be transported efficiently with the minimum number of messages. The number of messages exchanged between two domains should not depend on the number of receivers. The real-time characteristics of the signalling must not be dependent on the number of exploders involved in a multiparty session and must not be negatively affected by the presence of several exploders in the session. There should be a mechanism to detect and avoid loops resulting from the concatenation of several lists.

According to a first aspect of the present invention there is provided a method of delivering a copy of a Session Initiation Protocol, SIP, message to each of a plurality of terminals in a multimedia communication system, the method comprising:
receiving the message at a first SIP exploder;
grouping destination addresses defined for the SIP message according to their network domains; and
for each group of destination addresses corresponding to a domain associated with a further SIP exploder, forwarding a single copy of the message to that exploder, the message containing all of the destination addresses of the group.

Typically, the SIP exploder is an application server which receives and sends SIP messages via a SIP proxy server. In the example of a 3G implementation of the invention, this SIP proxy server may be a Serving Call/Session Control Function (S-CSCF). The S-CSCF selectively forwards SIP messages to the exploder according to some pre-defined rule set. Of course, in some implementations, the exploder may receive SIP messages directly from the SIP terminal.

A destination address may be the address of a terminal user or an identification of a list of terminal users and/or other lists.

In the case that a SIP message contains in the destination field a list, the members of the list are identified by the exploder if the list belongs to the same domain as the exploder, and the message is sent to each of the identified members.

The message received at the first SIP exploder may be carried within a message of type SIP EXPLODE, in which case the destination addresses may be carried in the SIP EXPLODE message.

According to a second aspect of the present invention there is provided a method of delivering a copy of a Session Initiation Protocol, SIP, message to each of a plurality of terminals in a multimedia communication system, the method comprising:
receiving a SIP message at a first SIP exploder, the message having as a destination address an address of a list associated with a further SIP exploder;
forwarding a copy of the message to said further SIP exploder, the message including the list address;
at the further SIP exploder, determining whether the list contains a destination address associated with another exploder and, if yes, returning a SIP REFER message to the first exploder, the REFER message containing that destination address.

According to a third aspect of the present invention there is provided a method of delivering a SIP message to a plurality of terminals in a multimedia communication system which uses Session Initiation Protocol (SIP), the method comprising:
for a given SIP message, recording at a SIP exploder the destination addresses to which that message has been sent by that exploder and comparing the destination addresses, associated with subsequent requests to send the same message, to the recorded addresses in order to avoid the sending of duplicate messages to the same destination addresses.

In a embodiment, the first, second, and third aspects of the invention are implemented in a single system. Other embodiments may make use of only one or two of the aspects.

Other aspects of the invention are set out in the appended claims.

### Brief Description of the Drawings

Figure 1 illustrates schematically the IMS architecture;
Figure 2 illustrates schematically a multi-network environment in which each network has its own SIP exploder;
Figure 3 illustrates SIP signalling associated with setting up a multi-media session in the environment of Figure 2;
Figure 4 illustrates a modified SIP signalling procedure associated with setting up a multi-media session in the environment of Figure 2; and
Figure 5 illustrates further the modified SIP signalling procedure of Figure 4.

### Detailed Description of Certain Embodiments

A new SIP message handling procedure is described here which aims to solve the aforementioned problems of the conventional procedures. The general principles of the solution are:
1. The first exploder in any chain is assigned as the "master" exploder of the session.
2. Subsequent exploders are assigned as "slave" exploders.
3. The master exploder is allowed to send a copy of the SIP message to local resources as well as resources located in different networks (e.g., under the control of other exploders).
4. A master exploder that is sending a copy of a SIP request to a number of resources sends a single copy of the SIP request per destination network, the request being sent to the exploder controlling the destination network and identifying each of the intended end users in that destination network.
5. A slave exploder receiving a SIP request is allowed to send a copy of the SIP message only to its local resources. If, due to list expansion, the slave exploder needs to send a copy of the SIP request to resources not under its own control, it sends a SIP REFER request back to the master exploder, the REFER request containing the list of external resources that must be contacted.
6. A master exploder that receives a SIP REFER request identifying one or more destinations, creates a copy of the initial SIP request and sends it to the appropriate destination(s) with the same restrictions described in points 3 and 4 above.
7. The master exploder maintains a record of all the destination addresses to which it has sent messages, in order to enable it to avoid sending duplicate messages to the same user, e.g., when a user belongs to two nested lists.

The concept of the SIP exploder has been introduced above. Lists are defined at exploders using various different mechanisms. For example, a user might log onto a web page and manage his lists interactively. Alternatively some specific protocol might be used. The IETF is working on a protocol, namely XCAP (XML Configuration Access Protocol), that provides the functionality to configure lists. 3GPP has defined an interface between Application Servers (the exploder is an Application Server) and the IMS terminals. This interface is named the Ut interface, and the protocol is referred to as XCAP. Yet another alternative is for network administrators to manage lists.

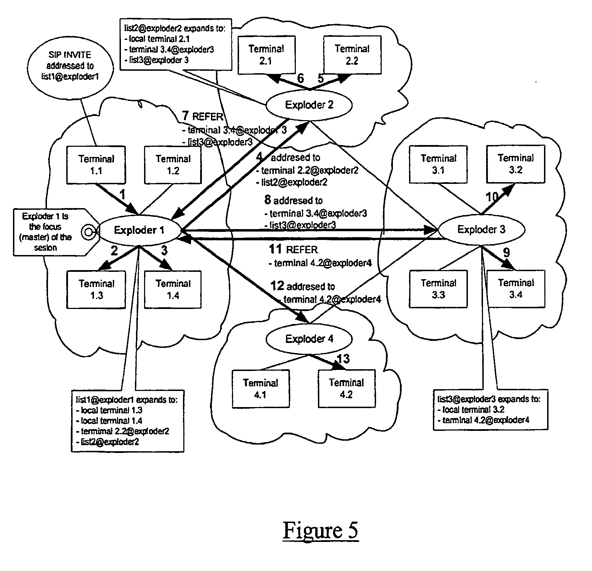

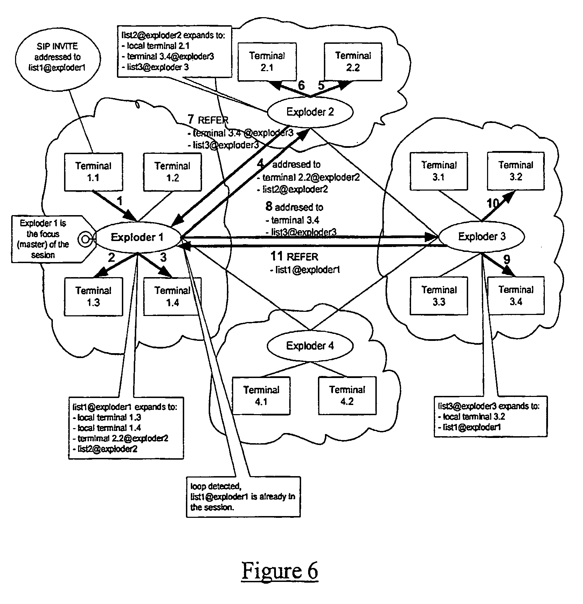

Figure 5 illustrates the proposed procedure, again using the example of the SIP INVITE message. The message is assumed to have the same properties as the message used in the example described with reference to Figures 2 and 3. Terminal 1.1 sends the SIP INVITE request addressed to list1@exploder1. As Exploder1 is the first exploder in the chain, it adopts the role of the master exploder for the session, and signals its role in the SIP messages that it subsequently sends. This may be achieved using the existing IsFocus parameter contained in the SIP Contact header. When a User Agent inserts an "isfocus" parameter in that header, it is signalling that it is acting as a focus for a centralized conference system. The "isfocus" parameter is defined in draft-ietf-sip-callee-caps-02.txt.

Exploder 1 receives the INVITE request (message 1 in Figure 5) and evaluates the contents of list1. List1 contains entries for two local terminals, so Exploder 1 sends an INVITE request to each of these terminals (messages 2 and 3). List1 also contains two entries that belong to the same administrative domain, i.e. "exploder2". These two entries are terminal2.2@exploder 2 and list2@exploder2. Exploder 1 sends a single INVITE request (message 4) addressed to both termina12.2@exploder2 and list2@exploder2.

Exploder 2 receives the INVITE request (message 4) addressed to both the local terminal 2.2 and list2. It determines from message 4 that it is not the master exploder of the session, so it adopts the role of the slave exploder of the session. Exploder 2 then creates an INVITE request and sends it to Terminal 2.2 (message 5). Then Exploder 2 evaluates list2 and finds three entries: one of these is local (Terminal 2.1), the other two are not (Terminal3.4@exploder 3 and list3@exploder3). As Exploder 2 has adopted the role of the slave exploder of the session, it only creates a copy of the INVITE request for the local Terminal: it does not create copies of the INVITE request to entities that are located outside its own control. Rather, it sends a SIP REFER request [IETF: The Session Initiation Protocol (SIP) Refer Method, RFC 3515] back to Exploder 1 (message 7 in Figure 5). The REFER request contains the contents of the list2 that are not local to Exploder 2, i.e. Terminal3.4@exploder3 and list3@exploder3.

Exploder 1 receives the REFER request and collects the addresses contained in the message into groups according to their local networks. In this example, both addresses in the REFER request (message 7) are part of the network controlled by Exploder 3. Therefore, Exploder 1 creates a new INVITE request addressed to Terminal3.4@exploder3 and list3@exploder3 and it sends it to Exploder 3 (message 8 in Figure 5). The INVITE request again contains an indication that Exploder 1 is acting as the master exploder of the session.

Exploder 3 receives the INVITE request (message 8) and it sends a copy to its local Terminal 3.4 (message 9). It then evaluates the other destination, namely list3. List3 contains two entries, one local (Terminal 3.2), so Exploder 3 sends a copy of the INVITE request to Terminal 3.2 (message 10). The other entry in list3 points to Terminal4.2@exploder 4. As Exploder 3 is not the master exploder of the session, Exploder 3 does not send an INVITE to any resource bcated outside its own domain. Instead, Exploder 3 creates a REFER request (message 11 in Figure 5) with Terminal4.2@exploder4 as the final destination and sends it back to Exploder 1.

Exploder I receives the REFER request (message 11 in Figure 5) and creates a copy of the INVITE request addressed to Terminal4.2@exploder4 (message 12). When Exploder 4 receives the INVITE request, it explodes only to its local resources, in this case Terminal4.2 (message 13).

Although in this example the originating SIP INVITE message contains only a single destination address (i.e. list1@exploder1), the message may contain multiple destination addresses. This option is used, for example, in so-called Push-to-Talk Over Cellular (POC) services.

In a variation of the procedure described above, SIP messages destined for multiple users may be carried within a SIP EXPLODE message type. The destination addresses are carried in the EXPLODE message. A S-CSCF node will automatically forward EXPLODE type messages to the attached exploder.

The solution presented here is worthy because the signalling path established is of a star configuration, with the master exploder at the centre of the star and the slave exploders around the periphery, rather than a chain. All subsequent signalling between any two terminals will need to traverse at most two exploders, independent of the total number of exploders in the session. The real-time characteristics of a session are not critically dependent upon the number of exploders in the session.

Figure 5 illustrates how the same SIP signalling procedure also solves the loop problem identified above. Considering Exploder 3, when it receives an INVITE request (message 8) addressed, among others, to list3@exploder3, it will not explode to resources located beyond its own control. Therefore, it will send a REFER request back to Exploder 1 (message 11), the REFER request indicating that list1@exploder1 must be contacted.

Exploder 1 is aware that it is acting as the master exploder for the session. It maintains a list of all the resources currently involved, directly (terminals and lists) or indirectly (resources in lists). Therefore, Exploder 1 is aware that list1@exploder1 has been already been expanded and each entry has been contacted and added to the session. Therefore, there is no need to expand list1@exploder1 again. The session setup procedure is considered to be complete, and no more actions are taken at Exploder 1 during this phase.

## Claims

1. A method of delivering a copy of a Session Initiation Protocol, SIP, message to each of a plurality of terminals in a multimedia communication system, the method comprising:
receiving the message at a first SIP exploder;
grouping destination addresses defined for the SIP message according to their network domains; and
for each group of destination addresses corresponding to a domain associated with a further SIP exploder, forwarding a single copy of the message to that exploder, the message containing all of the destination addresses of the group.

2. A method according to claim 1, wherein a destination address is the address of a terminal user or an identification of a list of terminal users and/or other lists.

3. A method according to claim 1 or 2, wherein the SIP exploder is an application server which receives and sends SIP messages via a SIP proxy server, the SIP proxy server selectively forwarding SIP messages to the exploder according to some pre-defined rule set.

4. A method according to any one of the preceding claims and comprising, for each destination address identifying a list associated with the same network domain as the first exploder, determining the terminal user destination addresses of the list and delivering the message individually to these addresses and to other user terminal destination addresses in the same domain.

5. A method of delivering a copy of a Session Initiation Protocol, SIP, message to each of a plurality of terminals in a multimedia communication system, the method comprising:
receiving a SIP message at a first SIP exploder, the message having as a destination address an address of a list associated with a further SIP exploder;
forwarding a copy of the message to said further SIP exploder, the message including the list address;
at the further SIP exploder, determining whether the list contains a destination address associated with another exploder and, if yes, returning a SIP REFER message to the first exploder, the REFER message containing that destination address.

6. A method according to claim 5, wherein, upon receipt of the SIP REFER message, the first exploder forwards the SIP message to the exploder associated with the destination address.

7. A method of delivering a SIP message to a plurality of terminals in a multimedia communication system which uses Session Initiation Protocol (SIP), the method comprising:
for a given SIP message, recording at a SIP exploder the destination addresses to which that message has been sent by that exploder and comparing the destination addresses, associated with subsequent requests to send the same message, to the recorded addresses in order to avoid the sending of duplicate messages to the same destination addresses.

8. A method according to claim 7, wherein a destination address is an address of a user of a terminal or an identification of a list of user terminal destination addresses and/or other lists.

9. A Session Initiation Protocol Application Server for use in a multimedia communication system and arranged to act as a SIP exploder, the Application Server comprising:
means coupled to an input for receiving a SIP message;
means for grouping destination addresses defined for the SIP message according to their network domains; and
means coupled to an output and arranged, for each group of destination addresses corresponding to a domain associated with a further SIP exploder, to forward a single copy of the message to that exploder, the message containing all of the destination addresses of the group.

10. A Session Initiation Protocol Application Server for use in a multimedia communication system and arranged to act as a SIP exploder, the Application Server comprising:
means coupled to an input for receiving a SIP message, the message having as a destination address an address of a list associated with a further SIP exploder;
means coupled to an output for forwarding a copy of the message to said further SIP exploder, the message including the list address;
means coupled to an input for receiving a SIP REFER message from said further exploder or another exploder, sent in response to the initial SIP message; and
means for sending the initial message to the or each destination address contained in the SIP REFER message.

11. A Session Initiation Protocol Application Server for use in a multimedia communication system and arranged to act as a SIP exploder, the Application Server comprising:
means coupled to an input for receiving a SIP message from another SIP exploder, the message having as a destination address an identification of a list;
means for determining whether or not the list contains destination addresses associated with other SIP exploders; and
means coupled to an output and arranged, in the event that the list does contain destination addresses associated with other SIP exploders, to send a SIP REFER message to the originating exploder, the SIP REFER message containing those destination addresses.

12. A Session Initiation Protocol Application Server for use in a multimedia communication system and arranged to act as a SIP exploder, the Application Server comprising:
means for recording the destination addresses to which a SIP message has been sent by the exploder; and
means for comparing the destination addresses, associated with subsequent requests to send the same message, to the recorded addresses in order to avoid the sending of duplicate messages to the same destination addresses.

## Patentansprüche

1. Verfahren zur Lieferung eines Exemplars einer Sitzungseinleitungsprotokoll-(SIP)-Nachricht an jedes einer Vielzahl von Endgeräten in einem Multimedia-Kommunikationssystem, das Verfahren umfassend:
Empfangen der Nachricht an einem ersten SIP-Exploder;
Gruppieren von Zieladressen, die für die SIP-Nachricht definiert sind, nach ihren Netzdomänen; und
für jede Gruppe von Zieladressen, die mit einer Domäne korrespondieren, die mit einem weiteren SIP-Exploder assoziiert sind, Weiterleiten eines einzelnen Exemplars der Nachricht an diesen Exploder, wobei die Nachricht sämtliche der Zieladressen der Gruppe enthält.

2. Verfahren nach Anspruch 1, wobei eine Zieladresse die Adresse eines Endgerätebenutzers oder eine Identifizierung einer Liste von Endgerätebenutzern und/oder anderer Listen ist.

3. Verfahren nach Anspruch 1 oder 2, wobei der SIP-Exploder ein Anwendungsserver ist, der SIP-Nachrichten über einen SIP-Proxyserver empfängt und sendet, wobei der SIP-Proxyserver selektiv SIP-Nachrichten nach einem vordefinierten Regelsatz an den Exploder weiterleitet.

4. Verfahren nach einem der vorstehenden Ansprüche und für jede Zieladresse, die eine Liste identifiziert, die mit derselben Netzdomäne wie der erste Exploder assoziiert ist, Bestimmung der Endgerätebenutzer-Zieladressen der Liste und Lieferung der Nachricht individuell an diese Adressen und an andere Benutzerendgeräte-Zieladressen in derselben Domäne umfassend.

5. Verfahren zur Lieferung eines Exemplars einer Sitzungseinleitungsprotokoll-(SIP)-Nachricht an jedes einer Vielzahl von Endgeräten in einem Multimedia-Kommunikationssystem, das Verfahren umfassend:
Empfangen einer SIP-Nachricht an einem ersten SIP-Exploder, wobei die Nachricht als eine Zieladresse eine Adresse einer Liste hat, die mit einem weiteren SIP-Exploder assoziiert ist;
Weiterleiten eines Exemplars der Nachricht an den weiteren SIP-Exploder, wobei die Nachricht die Listenadresse enthält;
Bestimmen an dem weiteren SIP-Exploder, ob die Liste eine Zieladresse enthält, die mit einem anderen Exploder assoziiert ist, und, falls ja, Zurückgeben einer SIP-REFER-Nachricht an den ersten SIP-Exploder, wobei die REFER-Nachricht diese Zieladresse enthält.

6. Verfahren nach Anspruch 5, wobei der erste Exploder nach Empfang der SIP-REFER-Nachricht die SIP-Nachricht an den Exploder weiterleitet, der mit der Zieladresse assoziiert ist.

7. Verfahren zur Lieferung einer SIP-Nachricht an eine Vielzahl von Endgeräten in einem Multimedia-Kommunikationssystem, das das Sitzungseinleitungsprotokoll (SIP) verwendet, das Verfahren umfassend:
Aufzeichnen der Zieladressen, an die die Nachricht gesandt wurde, an einem SIP-Exploder durch diesen Exploder für eine gegebene SIP-Nachricht und Vergleichen der Zieladressen, die mit anschließenden Anforderungen zum Senden der gleichen Nachricht assoziiert sind, mit den aufgezeichneten Adressen, um das Senden von doppelten Nachrichten an dieselben Zieladressen zu vermeiden.

8. Verfahren nach Anspruch 7, wobei eine Zieladresse eine Adresse eines Benutzers eines Endgeräts oder eine Identifizierung einer Liste von Benutzerendgeräte-Zieladressen und/oder anderer Listen ist.

9. Sitzungseinleitungsprotokoll-Anwendungsserver zur Verwendung in einem Multimedia-Kommunikationssystem und angeordnet, um als ein SIP-Exploder zu wirken, der Anwendungsserver umfassend:
Mittel, die an einen Eingang gekoppelt sind, zum Empfangen einer SIP-Nachricht;
Mittel zum Gruppieren von Zieladressen, die für die SIP-Nachricht nach ihren Netzdomänen definiert sind; und
Mittel, die an einen Ausgang gekoppelt sind und für jede Gruppe von Zieladressen, die mit einer Domäne korrespondieren, die mit einem weiteren SIP-Exploder assoziiert ist, angeordnet sind, um ein einzelnes Exemplar der Nachricht an diesen Exploder weiterzuleiten, wobei die Meldung sämtliche der Zieladressen der Gruppe enthält.

10. Sitzungseinleitungsprotokoll-Anwendungsserver zur Verwendung in einem Multimedia-Kommunikationssystem und angeordnet, um als ein SIP-Exploder zu wirken, der Anwendungsserver umfassend:
Mittel, die an einen Eingang gekoppelt sind, zum Empfangen einer SIP-Nachricht, wobei die Meldung als eine Zieladresse eine Adresse einer Liste hat, die mit einem weiteren SIP-Exploder assoziiert ist;
Mittel, die an einen Ausgang gekoppelt sind, zum Weiterleiten eines Exemplars der Nachricht an den weiteren SIP-Exploder, wobei die Nachricht die Listenadresse enthält;
Mittel, die an einen Eingang gekoppelt sind, zum Empfangen einer SIP-REFER-Nachricht von dem weiteren Exploder oder einem anderen Exploder, die als Reaktion auf die anfängliche SIP-Nachricht gesandt wurde; und
Mittel zum Senden der anfänglichen Nachricht an die oder jede in der SIP-REFER-Nachricht enthaltenen Zieladresse.

11. Sitzungseinleitungsprotokoll-Anwendungsserver zur Verwendung in einem Multimedia-Kommunikationssystem und angeordnet, um als ein SIP-Exploder zu wirken, der Anwendungsserver umfassend:
Mittel, die an einen Eingang gekoppelt sind, zum Empfangen einer SIP-Nachricht von einem anderen SIP-Exploder, wobei die Meldung als eine Zieladresse eine Identifizierung einer Liste hat;
Mittel zum Bestimmen, ob die Liste mit anderen SIP-Explodem assoziierte Zieladressen enthält oder nicht; und
Mittel, die an einen Eingang gekoppelt sind und angeordnet sind, um in dem Fall, dass die Liste mit anderen SIP-Explodem assoziierte Zieladressen enthält, eine SIP-REFER-Nachricht an den Ursprungs-Exploder zu senden, wobei die SIP-REFER-Nachricht diese Zieladressen enthält.

12. Sitzungseinleitungsprotokoll-Anwendungsserver zur Verwendung in einem Multimedia-Kommunikationssystem und angeordnet, um als ein SIP-Exploder zu wirken, der Anwendungsserver umfassend:
Mittel zum Aufzeichnen der Zieladressen, an die eine SIP-Nachricht von dem Exploder gesandt wurde; und
Mittel zum Vergleichen der Zieladressen, die mit anschließenden Anforderungen zum Senden der gleichen Nachricht assoziiert sind, mit den aufgezeichneten Adressen, um das Senden von doppelten Nachrichten an dieselben Zieladressen zu vermeiden.

## Revendications

1. Procédé de fourniture d'une copie d'un message de protocole d'initiation de session, SIP, à chacun d'une pluralité de canaux dans un système de communication multimédia, le procédé comprenant :
la réception du message sur un premier exploseur SIP ;
le groupement des adresses de destination définies pour le message SIP selon leurs domaines de réseau ; et
pour chaque groupe d'adresses de destination correspondant à un domaine associé à un autre exploseur SIP, transfert d'une copie simple du message à cet exploseur, le message contenant toutes les adresses de destination du groupe.

2. Procédé selon la revendication 1, dans lequel une adresse de destination est l'adresse d'un utilisateur de terminal ou une identification d'une liste d'utilisateurs de terminal et/ou d'autres listes.

3. Procédé selon la revendication 1 ou 2, dans lequel l'exploseur SIP est un serveur d'application qui reçoit et envoie des messages SIP via un serveur proxy SIP, le serveur proxy SIP envoyant sélectivement des messages SIP à l'exploseur selon un certain ensemble de règle prédéfini.

4. Procédé selon l'une quelconque des revendications précédentes et comprenant, pour chaque adresse de destination l'identification d'une liste associée au même domaine de réseau que le premier exploseur, la détermination des adresses de destination d'utilisateur terminal de la liste et la fourniture du message individuellement à ces adresses et aux autres adresses de destination de terminal d'utilisateur dans le même domaine.

5. Procédé de fourniture d'une copie d'un message de protocole d'initiation de session SIP à chacune d'une pluralité de terminaux dans un système de communication multimédia, le procédé comprenant :
la réception d'un message SIP sur un premier exploseur SIP, le message ayant comme adresse de destination une adresse d'une liste associée à un autre exploseur SIP ;
le transfert d'une copie du message audit autre exploseur SIP, le message comprenant l'adresse de liste ;
sur l'autre exploseur SIP, détermination si la liste contient une adresse de destination associée à un autre exploseur et, si oui, retour d'un message SIP REFER au premier exploseur, le message REFER contenant cette adresse de destination.

6. Procédé selon la revendication 5, dans lequel, lors de la réception d'un message SIP REFER, le premier exploseur transfert le message SIP à l'exploseur associé à l'adresse de destination.

7. Procédé de fourniture d'un message SIP à une pluralité de terminaux dans un système de communication multimédia qui utilise un protocole d'initiation de session (SIP), le procédé comprenant :
pour un message SIP donné, l'enregistrement sur un exploseur SIP des adresses de destination auxquelles ce message a été envoyé par cet exploseur et comparaison des adresses de destination, associées aux demandes qui suivent pour envoyer le même message, aux adresses enregistrées afin d'éviter l'envoi des messages dupliqués aux mêmes adresses de destination.

8. Procédé selon la revendication 7, dans lequel une adresse de destination est une adresse d'un utilisateur d'un terminal ou une identification d'une liste des adresses de destination de terminal d'utilisateur et/ou d'autres listes.

9. Serveur d'application de protocole d'initiation de session destiné à être utilisé dans un système de communication multimédia et disposé pour agir comme un exploseur SIP, le serveur d'application comprenant :
un moyen couplé à une entrée pour recevoir un message SIP ;
un moyen pour grouper des adresses de destination définies pour le message SIP selon leurs domaines de réseau; et
un moyen couplé à une sortie et disposé, pour chaque groupe d'adresses de destination correspondant à un domaine associé à un autre exploseur SIP, pour envoyer une copie simple du message à cet exploseur, le message contenant toutes les adresses de destination du groupe.

10. Serveur d'application de protocole d'initiation de session destiné à être utilisé dans un système de communication multimédia et disposé pour agir comme un exploseur SIP, le serveur d'application comprenant :
un moyen couplé à une entrée pour recevoir un message SIP, le message ayant comme adresse de destination une adresse d'une liste associée à un autre exploseur SIP ;
un moyen couplé à une sortie pour envoyer une copie du message audit autre exploseur SIP, le message comprenant l'adresse de liste ;
un moyen couplé à une entrée pour recevoir un message SIP REFER à partir dudit exploseur ou un autre exploseur, envoyé en réponse au message SIP initial ; et
un moyen pour envoyer le message initial à ou à chaque adresse de destination contenue dans le message SIP REFER.

11. Serveur d'application de protocole d'initiation de session destiné à être utilisé dans un système de communication multimédia et disposé pour agir comme un exploseur SIP, le serveur d'application comprenant :
un moyen couplé à une entrée pour recevoir un message SIP à partir d'un autre exploseur SIP, le message ayant comme adresse de destination une identification d'une liste ;
un moyen pour déterminer si oui ou non la liste contient des adresses de destination associées à d'autres exploseurs SIP ; et
un moyen couplé à une sortie et disposé, dans le cas où la liste contient des adresses de destination associées à d'autres exploseurs SIP, pour envoyer un message SIP REFER à l'exploseur d'origine, le message SIP REFER contenant ces adresses de destination.

12. Serveur d'application de protocole d'initiation de session destiné à être utilisé dans un système de communication multimédia et disposé pour agir comme un exploseur SIP, le serveur d'application comprenant :
un moyen pour enregistrer des adresses de destination auxquelles un message SIP a été envoyé par l'exploseur ; et
un moyen pour comparer les adresses de destination, associées aux demandes qui suivent pour le même message, aux adresses enregistrées afin d'éviter l'envoi des messages dupliqués aux mêmes adresses de destination.
